# EUROPEAN PATENT SPECIFICATION

(11) **EP 0 439 583 B1**
(45) Date of publication and mention of the grant of the patent: **14.02.1996**
(21) Application number: 90912176.6
(22) Date of filing: 17.08.1990
(51) Int. Cl.: H04Q 7/06, H04M 1/72, H04J 3/06

(54) **METHOD OF, AND PRIMARY STATION FOR, OPERATING A TELEPHONE SYSTEM**
VERFAHREN UND ORTSFESTE STATION ZUR STEUERUNG EINES FERNSPRECHSYSTEMS
PROCEDE ET STATION PRIMAIRE DE COMMANDE D'UN SYSTEME TELEPHONIQUE

(30) Priority: 18.08.1989 GB 8918908
(43) Date of publication of application: 07.08.1991
(73) Proprietor: HUTCHISON PERSONAL COMMUNICATIONS LIMITED, Almondsbury, Bristol, BS12 4QJ (GB)
(72) Inventor: CANDY, Edwin, Ralph, Reach Cambridgeshire CB5 0JF (GB)
(74) Representative: Boxall, Robin John
(86) International application number: GB9001298
(87) International publication number: WO9103136

(56) References cited:
- EP-A- 0 286 614
- GB-A- 2 110 055
- US-A- 4 414 661
- US-A- 4 513 415

## Description

### TECHNICAL FIELD

The present invention relates to a method of, and primary station for, operating a cordless telephone system in which communication between fixedly site primary stations and moveable secondary stations is by way of time division duplex (TDD) radio links, more particularly single frequency TDD links.

### BACKGROUND ART

A particular, but not exclusive, example of such a telephone system is the Second Generation Cordless Telephone (CT2), otherwise known as the Telepoint system. The common air interface specification for CT2 has been published as MPT 1375 by the Department of Trade and Industry, London 1989. In order to provide public access services, fixedly sited primary stations are placed at convenient locations, such as railways stations, banks and petrol stations. The primary stations are connected to the PSTN (Public Switched Telephone Network) and comprise a radio transceiver for communication with a roaming transportable secondary station which is also equipped with a transceiver. In CT2 a telephone call is initiated by the secondary station only. The radio link between the primary and secondary stations is a single frequency time division duplex (TDD) link. As is disclosed in MPT 1375 the transmission duplexing comprises a first time period in which the primary station transmits and the secondary station receives. This is followed after a predefined guard space by a second time period in which the secondary station transmits and the primary station receives. After another guard space the cycle is repeated.

If there are two or more primary stations mounted in close proximity a problem which arises is that unless their TDD framing structures are synchronised then it is quite likely that they will interfere with each other because when one primary station is transmitting, another primary station is receiving, and the close proximity of two or more non-synchronised transceivers will lead to interfering transmitted signals being picked-up by the switched-on receiver sections even though they are not tuned to the transmitted signal.

Synchronising the TDD framing structures of the transceivers will significantly reduce and/or eliminate such interference. However such synchronisation has to be fairly precise because MPT 1375 requires the amplitude of the RF envelope to ramp-up at such a rate that the envelope will be within 3dB of the final amplitude at the start of the first bit transmitted at a rate of 72 kbits/second with a tolerance of ± 100ppm at the secondary station and ± 50ppm at the primary station. Although a master clock could be provided in the vicinity of each group of primary stations, this would not only add the cost of the fixedly sited equipments but would also require the provision of landline connections which is undesirable if for example primary stations are located on opposite sides of a road.

GB-A-2110055 discloses a telephone system comprising a plurality of subscriber sets, each subscriber set having a base unit, which is linked to conventional exchange equipment by way of a line pair, and an associated mobile handset which is linked by radio to the respective base unit. Each base unit is powered from the mains electricity supply and includes means responsive to the alternating current waveform of the mains supply to generate timing signals synchronised with said alternating current waveform to define one or more frame periods within each cycle of said alternating current waveform. This citation does not relate to a telepoint cordless telephone system where the moveable handset initiates a call by way of any in-range base station having access to the system. Synchronising base stations using the mains electricity supply has the disadvantage of requiring the base stations to be connected to a conveniently located source of alternating current having the desired frequency.

### DISCLOSURE OF INVENTION

An object of the present invention is to be able to synchronise groups of primary stations of a cordless telephone system in a simple but effective manner.

According to one aspect of the present invention there is provided a method of operating a cordless telephone system including fixed site primary stations and moveable secondary stations, each having radio transceiving means, the method comprising the steps of establishing a time division duplex radio link between a primary station and a secondary station of the cordless telephone system; and synchronising at least two primary stations of the cordless telephone system using a characteristic of a radio signal, which radio signal is broadcast by a source external to the cordless telephone system and which characteristic used to synchronise the primary stations is present in the received signal for a reason other than synchronising stations in the cordless telephone system.

According to a second aspect of the present invention there is provided a primary station for use in a cordless telephone system, in which communication between the primary station and a moveable secondary station is by way of a time division duplex radio link, said primary station comprising radio transceiving means for communicating with a secondary station, means for receiving a radio signal which is broadcast by a source which is external to the cordless telephone system, means for deriving a characteristic from the received radio signal, which characteristic is present in the received radio signal for a reason other than synchronising stations in the cordless telephone system, a clock generator for controlling the switching of the radio transceiving means between successive transmit and receive periods, and means responsive to the derived characteristic for adjusting the clock generator so that the transmit period of the radio transceiving means are synchronised with those of at least one other primary station.

The synchronising signal may be derived from an existing signal such as the television field synchronisation signal. Using an existing television signal has some advantages in that no additional spectrum is required, that it can be received virtually nationwide, and that well proven circuitry exists for deriving such a signal. The fact that television signals may not be transmitted in the early hours of the morning is not looked upon as a serious disadvantage because the usage of telephones is generally minimal during that period so that the risk of interference by nearby non-synchronised primary stations is likely to be low.

The use of a broadcast radio signal to derive the synchronisation signal means that subject to be able to receive the radio signal the primary stations can be sited or resited in any convenient location without the problems of re-routing landlines if a locally generated clock signal was provided.

### BRIEF DESCRIPTION OF DRAWINGS

The present invention will now be described, by way of example, with reference to the accompanying drawings, wherein:
Figure 1 is a diagram illustrating two non-synchronised TDD transmissions by two primary stations,
Figure 2 is a diagram of a data packet with an RF envelope, and Figure 3 is a block schematic diagram of a primary and secondary station arranged at opposite sides of an air interface.

### BEST MODE FOR CARRYING OUT THE INVENTION

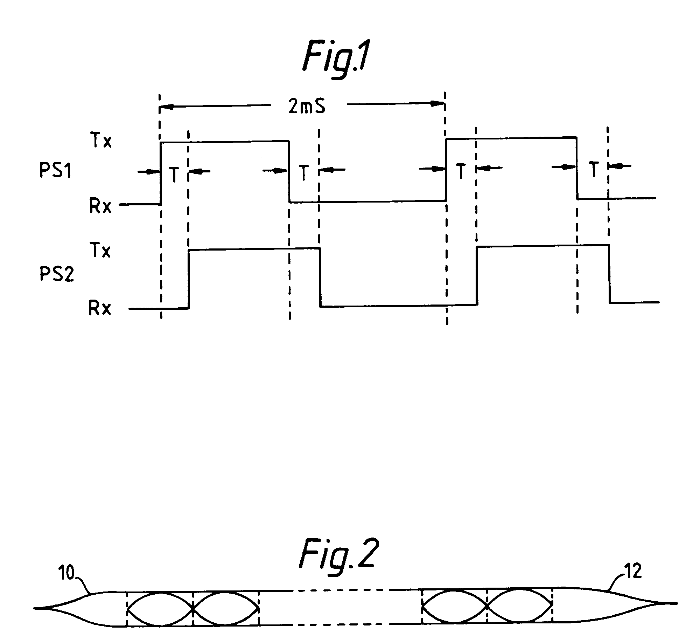

Referring to Figure 1 which shows the transmission burst structure of two non-synchronised fixedly sited primary stations PS1 and PS2. The bursts are repeated every 2mS. Following the transmission of a burst, the respective primary stations PS1, PS2 switch to receive transmissions from transportable secondary stations. When in the receive condition each of the primary stations can also pick-up interference due to transmissions from cosited or nearby primary stations even though they are at different frequencies. CT2 specifies a channel separation of 100KHz between adjacent single frequency TDD duplex channels. As the transmissions by the primary stations PS1 and PS2 are not synchronised then as shown by broken lines there are successive periods T when the transmitter of one station is transmitting whilst that of the other station has switched to a receive condition. Accordingly by synchronising the transmission periods of both primary stations PS1, PS2, such interference would be reduced or substantially eliminated.

Figure 2 illustrates a data packet within an RF envelope. The specification for the ramp-up 10 and the ramp-down 12 is given in CT2 and in particular the ramp-up should be such that the amplitude of the RF envelope should be within 3dB of the final amplitude at the start of the first bit transmitted, the transmission rate for CT2 being 72kbits/second. Accordingly the synchronisation between respectively produced RF envelopes must be fairly precise in order to reduce cross interference between adjacently positioned primary stations.

In accordance with the method of the present invention the transmit periods of base stations can be framed or synchronised by means of a radio signal. A suitable currently broadcast signal is a television field synchronisation signal which in Great Britain has a frequency of 50Hz, that is one synchronisation signal every 20mS. Such a signal can be used to synchronise a 500Hz clock generator in the primary station. However a greater accuracy can be obtained by dividing the clock period by 10 to derive clock signals every 2mS.

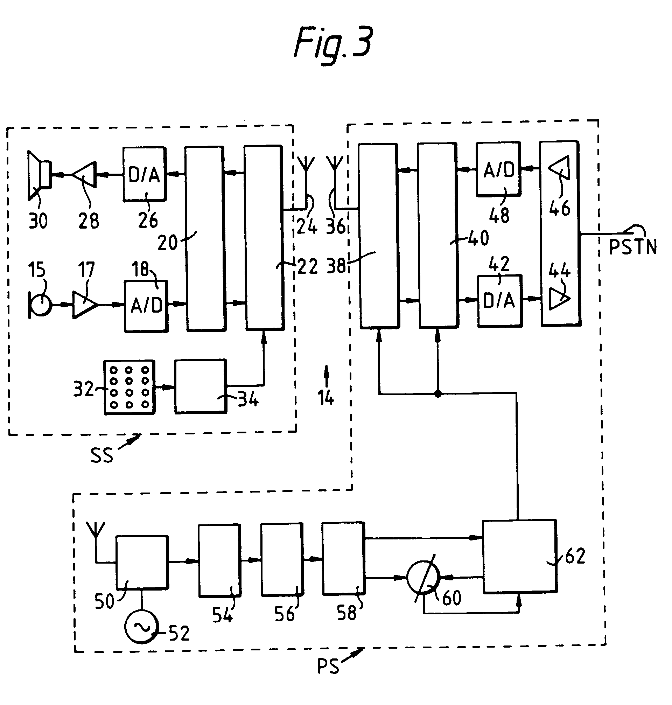

Figure 3 illustrates in block schematic form a fixedly sited primary station PS and a transportable secondary station SS having an air interface 14. In practice there will be a plurality of primary stations and an even larger number of roaming transportable secondary stations. In the CT2 system calls can only be initiated by secondary stations.

The secondary station SS comprises a microphone 15 connected by way of an amplifier 17 to a combined analogue to digital (A/D) converter and filter block 18 which also contains companding and CODEC functions. The output from the block 18 is supplied to an ADPCM (Adaptive Differential Pulse Code Modulation) transcoder 20 which in turn is connected to a transceiver block 22 having an antenna 24.

Signals received at the antenna 24 are, after demodulation in the transceiver 22, applied to the transcoder 20. A digital-to-analogue (D/A) filter block 26 is connected to the transcoder 20 and produces analogue speech signals which after amplification in an amplifier 28 is applied to an audio output transducer 30.

The secondary station SS also includes a keypad 32 and an associated control block 34 which enable a call to be initiated.

The primary station PS comprises an antenna 36 which is connected to a transceiver 38. An output of the transceiver 38 is applied to an ADPCM transcoder 40 whose signal output is applied by way of a D/A filter block 42 and an amplifier 44 to the PSTN.

Conversely signals from the PSTN are applied by way of an amplifier 46 and A/D filter block 48 to the transcoder 40. The data output of which is applied to the transceiver 38 for onward transmission to the secondary station SS. The call set-up procedures will not be described because one method is fully disclosed in MPT 1375.

In order to be able to derive synchronising signals from an externally provided television field synchronising signal, the primary station PS further comprises a known type of television receiver, for example a receiver as used in a video tape recorder, which includes an RF stage 50 to which a local oscillator 52 is connected to frequency down-convert a received signal. An IF stage 54 recovers the IF signal which is supplied to a sync. separator 56. The field synchronisation pulses are recovered and applied to a pulse shaper and divider 58. The divider 58 produces pulses every 2mS which are supplied to a phase comparator 60 and to a primary station clock signal generator 62. In order to synchronise the framing of the clock signals, an output from the generator 62 is compared with the signal already supplied to the phase comparator 60 by the divider 58 and an error signal is derived which is used to synchronise the clock signals of the respective primary station.

Synchronisation circuitry could be incorporated into secondary stations but in many respects it would be superfluous because a user of a secondary station experiencing such interference can move away from the interfering secondary station.

Although the present invention has been described with reference to the CT2 system it is equally applicable to other single frequency TDD systems.

From reading the present disclosure, other modifications will be apparent to persons skilled in the art. Such modifications may involve other features which are already known in the design, manufacture and use of single frequency TDD systems and component parts thereof and which may be used instead of or in addition to features already described herein.

## Claims

1. A method of operating a cordless telephone system including fixed site primary stations (PS) and moveable secondary stations (SS), each having radio transceiving means, the method comprising the steps of establishing a time division duplex radio link between a primary station and a secondary station of the cordless telephone system; and synchronising at least two primary stations of the cordless telephone system using a characteristic of a radio signal, which radio signal is broadcast by a source external to the cordless telephone system and which characteristic used to synchronise the primary stations is present in the received signal for a reason other than synchronising stations in the cordless telephone system.

2. A method as claimed in Claim 1, in which the characteristic is a television field synchronisation signal.

3. A method as claimed in Claim 2, further comprising subdividing the period of the television field synchronisation signal.

4. A primary station (PS) for use in a cordless telephone system, in which communication between the primary station and a moveable secondary station (SS) is by way of a time division duplex radio link, said primary station comprising radio transceiving means (38), for communicating with a secondary station, means for receiving a radio signal which is broadcast by a source which is external to the cordless telephone system, means (50-60) for deriving a characteristic from the received radio signal, which characteristic is present in the received radio signal for a reason other than synchronising stations in the cordless telephone system, a clock generato (62) for controlling the switching of the radio transceiving means between successive transmit and receive periods, and means (60) responsive to the derived characteristic for adjusting the clock generator so that the transmit period of the radio transceiving means are synchronised with those of at least one other primary station.

5. A primary station as claimed in Claim 4, wherein when the radio signal is a television signal, the means for receiving the radio signal comprises a television signal receiving means (50-54) and the means for deriving said characteristic a television field synchronising signal separator (56).

6. A primary station as claimed in Claim 5, wherein a divider (58) is connected to the field synchronising signal separator for dividing down the period between successive field synchronisation signals.

## Patentansprüche

1. Verfahren zum Betreiben eines schnurlosen Fernsprechsystems mit ortsfesten Vermittlungsstationen (PS) und Mobilstationen (SS) mit je Funk-Sende-Empfangsmitteln, wobei das Verfahren die nachfolgenden Verfahrensschritte aufweist: das Schaffen einer Zeitduplex-Funkverbindung zwischen einer Feststation und einer Mobilstation eines schnurlosen Fernsprechsystems; und das Synchronisieren von wenigstens zwei Feststationen des schnurlosen Fernsprechsystems unter Verwendung eines Merkmals eines Funksignals, wobei dieses Funksignal von einer äußeren Quelle zu dem schnurlosen Fernsprechsystem funkübertragen wird und dessen Charakteristik, die zum Synchronisieren der Feststationen verwendet wird, für andere Zwecke als zum Synchronisieren von Stationen in dem schnurlosen Fernsprechsystem in dem empfangenen Signal vorhanden ist.

2. Verfahren nach Anspruch 1, wobei die Charakteristik ein Fernseh-Vertikal-Synchronsignal ist.

3. Verfahren nach Anspruch 2, weiterhin mit dem Verfahrensschritt der Unterteilung der Periode des Femseh-Vertikal-Synchronsignals.

4. Feststation (PS) zum Gebrauch bei einem schnurlosen Fernsprechsystem, wobei Kommunikation zwischen der Feststation und einer Mobilstation (SS) mittels einer Zeitduplex-Funkverbindung erfolgt, wobei die genannte Feststation Funk-Sende-Empfangsmittel (38) aufweist zum Kommunizieren mit einer Mobilstation, Mittel zum Empfangen eines Funksignals, das von einer Quelle funkübertragen wird, die sich außerhalb des schnurlosen Fernsprechsystems befindet, Mittel (50-60) zum Herleiten einer Charakteristik aus dem empfangenen Funksignal, wobei diese Charakteristik in dem empfangenen Funksignal vorhanden ist, und zwar aus einem Grund, anders als zum Synchronisieren von Stationen in dem schnurlosen Fernsprechsystem, einen Taktgenerator (62) zur Steuerung der Schaltvorgänge der Funk-Sende-Empfangsmittel zwischen aufeinanderfolgenden Sende- und Empfangsperioden, und Mittel (60), die in Antwort auf die abgeleitete Charakteristik den Taktgenerator einstellen, so daß die Übertragungs-perioden der Funk-Sende-Empfangs-Mittel zu denen von wenigstens einer anderen Feststation synchronisiert sind.

5. Feststation nach Anspruch 4, wobei wenn das Funksignal ein Fernsehsignal ist, die Mittel zum Empfangen des Funksignals ein Fernsehsignalempfangsmittel (50-54) aufweisen und die Mittel zum Herleiten der genannten Charakteristik ein Amplitudensieb (56) ist.

6. Feststation nach Anspruch 5, wobei eine Teilerstufe (58) mit dem Amplitudensieb verbunden ist zum Herunterteilen der Periode zwischen aufeinanderfolgenden Vertikal-Synchonsignalen.

## Revendications

1. Procédé de mise en oeuvre d'un système téléphonique sans cordon, comprenant des stations primaires (PS) en site fixe et des stations secondaires mobiles (SS), chacune d'entre elles ayant des moyens d'émission/réception radio, le procédé consistant à établir une liaison radio en duplex temporel entre une station primaire et une station secondaire du système téléphonique sans cordon, et à synchroniser au moins deux stations primaires du système téléphonique sans cordon en utilisant une caractéristique d'un signal radio, qui est diffusé par une source externe au système téléphonique sans cordon, ladite caractéristique, utilisée pour synchroniser les stations primaires, étant présente dans le signal reçu pour une raison autre que la synchronisation de stations dans le système téléphonique sans cordon.

2. Procédé selon la revendication 1, dans lequel la caractéristique est un signal de synchronisation de trame de télévision.

3. Procédé selon la revendication 2, comprenant, en outre, la subdivision de la période du signal de synchronisation d'image de télévision.

4. Station primaire (PS) qui est susceptible d'être utilisée dans le système téléphonique sans cordon, dans lequel la communication entre la station primaire et une station secondaire mobile (SS) se fait à l'aide d'une liaison radio en duplex temporel, ladite station primaire comprenant des moyens d'émission/réception radio (38) pour communiquer avec une station secondaire, des moyens pour recevoir un signal radio diffusé par une source qui est externe au système téléphonique sans cordon, des moyens (50-60) pour tirer une caractéristique du signal radio reçu, ladite caractéristique étant présente dans le signal radio reçu pour une raison autre que la synchronisation de stations dans le système téléphonique sans cordon, un générateur d'impulsions d'horloge (62) pour commander la commutation des moyens émetteurs/récepteurs radio entre des périodes d'émission et de réception successives, et des moyens (60) sensibles à la caractéristique obtenue pour ajuster le générateur d'impulsions d'horloge de telle sorte que la période d'émission des moyens émetteurs/récepteurs soit synchronisée avec celle d'au moins une autre station primaire.

5. Station primaire selon la revendication 4, dans laquelle, lorsque le signal radio est un signal de télévision, les moyens de réception du signal radio comprennent un moyen de réception de signal de télévision (50-54) et des moyens pour tirer ladite caractéristique d'un séparateur de signaux de synchronisation de trame de télévision (56).

6. Station primaire selon la revendication 5, dans laquelle un diviseur (58) est connecté au séparateur de signaux de synchronisation de trame pour diviser la période comprise entre des signaux de synchronisation de trame successifs.
